# EUROPÄISCHE PATENTSCHRIFT

(11) **EP 3 992 491 B1**
(45) Veröffentlichungstag und Bekanntmachung des Hinweises auf die Patenterteilung: **15.07.2026**
(21) Anmeldenummer: 21201518.4
(22) Anmeldetag: 07.10.2021
(51) Int. Cl.: F16F 1/38, F16F 1/387

(54) **LAGERBUCHSE**
BUSHING
COUSSINET DE PALIER

(30) Priorität: 20.10.2020 DE 102020127573
(43) Veröffentlichungstag der Anmeldung: 04.05.2022
(73) Patentinhaber: Vibracoustic SE, 69469 Weinheim (DE)
(72) Erfinder: Schemer, Thomas, 69257 Wiesenbach (DE); Le, Van-Hieu, 68309 Mannheim (DE); Thate, Andreas, 69469 Weinheim (DE)
(74) Vertreter: Patentanwälte Olbricht Buchhold Keulertz

(56) Entgegenhaltungen:
- EP-B1- 2 795 152
- JP-A- 2011 007 257
- JP-A- 2018 159 455
- JP-B2- 3 456 286

## Beschreibung

Die Erfindung betrifft eine Lagerbuchse gemäß dem Oberbegriff von Anspruch 1.

Eine Lagerbuchse kann dazu dienen, ein Kraftfahrzeugaggregat, wie beispielsweise einen Verbrennungsmotor, ein Getriebe oder einen Elektromotor, an einer Kraftfahrzeugkarosserie abzustützen. Zudem kann eine Lagerbuchse den Fahrkomfort verbessern, indem sie die von dem Kraftfahrzeugaggregat erzeugten Vibrationen isoliert und Fahrbahnanregungen dämpft.

Derartige Lagerbuchsen sind üblicherweise von einer Zentrallängsachse durchgriffen und umfassen einen Innenkern, der sich entlang der Zentrallängsachse erstreckt, ein Außenrohr, welches umfangsseitig zu dem Innenkern angeordnet ist, so dass sich ein Zwischenbereich ausbildet, und zumindest einen Elastomerkörper, welcher zwischen dem Innenkern und dem Außenrohr im Zwischenbereich angeordnet ist. Der Elastomerkörper kann in Radialrichtung bezüglich der Zentrallängsachse verlaufende Stege aufweisen, die den Zwischenbereich überspannen.

Auch derartige Lagerbuchsen schwingen mit einer Eigenfrequenz, die eine unerwünscht große Amplitude haben kann und/oder in einem unerwünschten Frequenzbereich auftritt. Überlagern sich die Eigenfrequenz und eine beispielsweise vom Kraftfahrzeugaggregat eingetragene Anregungsfrequenz, kann daraus eine Resonanz erfolgen. Diese Resonanz führt zu einer hohen dynamischen Steifigkeit der Lagerbuchse, was zur Folge hat, dass beispielsweise hochfrequente Schwingungen, welche aggregatseitig in die Karosserie gelangen, von der Lagerbuchse nicht zufriedenstellend reduziert werden können. Dann werden diese Schwingungen nämlich verstärkt wahrgenommen, was mitunter die Qualitätsanmutung des Fahrzeugs und den Komfort senken kann.

Das Dokument JP2018159455, das als nächstliegender Stand der Technik angesehen wird, offenbart eine Lagerbuchse mit allen Merkmalen des Oberbegriffs des Anspruchs 1.

Der Erfindung liegt daher die Aufgabe zugrunde, eine Lagerbuchse zu schaffen, welcher die Probleme des Standes der Technik überwindet, insbesondere eine Lagerbuchse vorzuschlagen, welche in verbesserter Weise ein Eintragen hochfrequenter Schwingungen in eine Karosserie verhindert und, welche in einfacher und kostengünstiger Weise konstruktiv für unterschiedliche Anwendungsfälle ausgestaltbar ist.

Hauptmerkmale der Erfindung sind im kennzeichnenden Teil von Anspruch 1 angegeben. Ausgestaltungen sind Gegenstand der Ansprüche 2 bis 10.

Erfindungsgemäß wird daher eine Lagerbuchse vorgeschlagen, durch welche eine Zentrallängsachse ragt, umfassend einen Innenkern, der der sich entlang der Zentrallängsachse erstreckt, ein Außenrohr, welches umfangsseitig zu dem Innenkern angeordnet ist, so dass sich ein Zwischenbereich zwischen dem Innenkern und dem Außenrohr ausbildet, zumindest einen Elastomerkörper, welcher zwischen dem Innenkern und dem Außenrohr im Zwischenbereich angeordnet ist, wobei der Elastomerkörper in Radialrichtung bezüglich der Zentrallängsachse verlaufende Stege aufweist, die den Zwischenbereich überspannen, wobei zumindest einem der Stege eine Anordnung von Radialvorsprüngen zugeordnet ist, welche an der Umfangsseite des Innenkerns und an der Innenseite des Außenrohrs angeordnet ist, wobei die Radialvorsprünge von der jeweiligen Seite in Radialrichtung in den Elastomerkörper einragen.

Durch die zumindest zwei Radialvorsprünge ist im Bereich des Steges eine in den Elastomerkörper radial einragende Geometrie geschaffen, mittels derer das Volumen des Elastomerkörpers bzw. die effektiv schwingfähige Masse des Elastomerkörpers sowie dessen geometrische Ausgestaltung beeinflussbar ist. Dadurch kann in vorteilhafter Weise die Eigenfrequenz der Lagerbuchse und des Elastomerkörpers sowie die Frequenzmoden und die dynamische Steifigkeit beeinflusst werden, denn durch diese Geometrievariation können die Schwingformen bewusst manipuliert werden. Das führt grundsätzlich zu Einstellmöglichkeiten der Lagerbuchse, um einen Resonanzpeak in seiner Frequenzlage zu verschieben oder aber im Frequenzband zu zerstreuen. Durch das Verschieben des zumindest einen Resonanzpeaks wird dieser zwar kaum oder gar nicht in seiner Amplitude verändert, jedoch kann er in einen Frequenzbereich verschoben werden, in welchem er als weniger störend von einem Nutzer wahrgenommen wird oder von anderen Einflüssen überlagert wird. Die Zerstreuung im Frequenzband belässt den zumindest einen Peak zwar grundsätzlich in seinem ungetunten Frequenzbereich, reduziert jedoch dessen Amplitude und verringert somit die Wahrnehmbarkeit durch den Nutzer.

Dadurch ist in vorteilhafter Weise eine Lagerbuchse geschaffen, die an unterschiedlichste Einbausituationen und Anforderungen in einfacher und kostengünstiger Weise angepasst werden kann.

Die zumindest eine Anordnung von Radialvorsprüngen kann zumindest zwei Radialvorsprünge aufweisen, wobei diese alle am Innenkern, alle am Außenrohr oder am Innenkern und am Außenrohr verteilt sein können, vorzugsweise sind die Radialvorsprünge in Längsrichtung abwechselnd am Außenrohr und am Innenkern angeordnet. Die Radialvorsprünge dienen zur Begrenzung der schwingfähigen Masse des Elastomerkörpers in Längsrichtung, wobei am Innenkern oder am Außenrohr benachbarte Radialvorsprünge in Längsrichtung einen Elastomerabschnitt zwischen sich einschließen oder begrenzen. Die Radialvorsprünge können unmittelbar am Elastomerelement anliegen und/oder vollständig vom Elastomerelement überdeckt sein. Zumindest ein Radialvorsprung kann als ein gegenüber einem Basisbereich des Innenkerns oder des Außenrohrs hervorspringendes Element ausgebildet sein, welches sich in Radialrichtung erstreckt.

Das als Innenkern bezeichnete Element kann selbst dasjenige Element sein, welches zur unmittelbaren Fixierung der Lagerbuchse an einer weiteren Struktur dient, beispielsweise an der Karosserie. Es kann jedoch auch an einem weiteren Element gelagert sein, beispielsweise an einer radial weiter innen liegenden Hülse, welche wiederum der Fixierung der Lagerbuchse dient. In diesem Fall kann der Innenkern fest mit dem radial weiter innen liegenden Element verbunden sein, beispielsweise mittels Reibschluss, Formschluss und/oder Stoffschluss. Der Innenkern und das Außenrohr können koaxial zueinander ausgerichtet sein. Der Innenkern und/oder das Außenrohr kann eine Hülse sein. Der Innenkern und/oder das Außenrohr können frei von end- oder stirnseitigen Flanschabschnitten sein.

Der Innenkern kann eine zentrale und sich zumindest abschnittsweise entlang der Längsachse erstrecken Ausnehmung aufweisen. Diese Ausnehmung kann ein zentraler Durchgriff entlang der Längsachse sein, welche von der einen Stirnseite der Lagerbuchse zur anderen reicht. Diese Ausnehmung kann jedoch auch lediglich zu einer Stirnseite hin offen sein. Denkbar ist auch eine Öffnung zu beiden Stirnseiten mit Ausbildung beidseitiger Sacklöcher, also keiner durchgreifenden Ausnehmung.

Das mindestens eine Elastomerelement kann das einzige die beiden Elemente Innenkern und Außenrohr verbindende Element sein. Das mindestens eine Elastomerelement kann unmittelbar am Innenkern über einen Anbindungsabschnitt und/oder am Außenrohr über einen Anbindungsabschnitt angebunden sein. Das mindestens eine Elastomerelement ist vorzugsweise anvulkanisiert an den Innenkern und/oder das Außenrohr, weiter bevorzugt innerhalb eines einzigen Vulkanisationsschrittes. Die Anbindungsabschnitte des mindestens eine Elastomerelement können sich in Radialrichtung zumindest abschnittsweise überdecken, vorzugsweise vollständig. Das Elastomerelement kann im Bereich eines jeweiligen Steges den Zwischenbereich vollständig ausfüllen - das Elastomerelement kann also frei von Ausnehmungen sein, wie beispielsweise Löcher oder Längsausnehmungen. Zumindest eine Stirnseite des Elastomerelements kann mit der Zentrallängsachse einen Winkel einschließen - die jeweilige Stirnseite kann also verkippt bezüglich der Zentrallängsachse verlaufen. Das kann zu einer verbesserten Kräfteeinleitung in den Innenkern führen, insbesondere, sofern sich das Elastomerelement oder der zumindest eine Steg in längsschnittlicher Radialrichtung auf den Innenkern zu verbreitert.

Die Stege können den Zwischenbereich radial komplett überspannen. Die Stege können das einzige die beiden Elemente Innenkern und Außenrohr verbindende Element sein. Vorzugsweise sind die Stege die einzigen im Zwischenbereich angeordneten Elemente. Zwischen in Umfangsrichtung benachbarten Stegen kann im Zwischenbereich ein Längsfreiraum ausgebildet sein, vorzugsweise über die gesamte Längserstreckung der benachbarten Stege. Der Längsfreiraum kann begrenzt sein durch den Innenkern, das Außenrohr und die beiden benachbarten Stege. Der Längsfreiraum kann also frei von separaten Anschlagselementen sein. Der Längsfreiraum kann auch als die Lagerbuchse durchgehende Ausnehmung ausgebildet sein, die zu beiden Stirnseiten der Buchse offen ist. Jeder Steg kann in Längsrichtung unterbrechungsfrei ausgebildet sein. Jeder Steg kann sich erstrecken von einer Stirnseite der Lagerbuchse zur gegenüberliegenden Stirnseite der Lagerbuchse.

Weiterbildungsgemäß können benachbarte Radialvorsprünge in Richtung der Zentrallängsachse versetzt zueinander an jeweils gegenüberliegenden Seiten bzw. der Umfangsseite des Innenkerns und an der Innenseite des Außenrohrs angeordnet sein, wobei die Lagerbuchse vorzugsweise zumindest einen am Innenkern angeordneten Innenvorsprung und zumindest einen am Außenrohr angeordneten Außenvorsprung umfasst. Somit sind die Radialvorsprünge nicht nur an gegenüberliegenden Seiten angeordnet, sondern können auch in Längsrichtung versetzt zueinander ausgebildet sein. Diese Ausführung ermöglich das axiale Begrenzen zumindest eines Abschnitts des Elastomerkörpers zur Frequenzbeeinflussung bei gleichzeitiger Gewährleistung einer ausreichenden statischen Steifigkeit.

Gemäß einer Weiterbildung der Lagerbuchse überdecken sich die an jeweils gegenüberliegenden Seiten bzw. die an der Umfangsseite des Innenkerns und an der Innenseite des Außenrohrs angeordneten Radialvorsprünge in Radialrichtung nicht - sie sind also in dieser Richtung überdeckungsfrei ausgebildet. Diese Ausführung kann eine ausreichende statische Steifigkeit gewährleisten.

Gemäß einer weiteren optionalen Ausgestaltung kann zwischen an jeweils gegenüberliegenden Seiten bzw. an der Umfangsseite des Innenkerns und an der Innenseite des Außenrohrs angeordneten Radialvorsprüngen ein direkter kleinster Abstand vorhanden sein. Vorzugsweise ist dieser kleinste Abend identisch zwischen allen seitlich abwechselnd angeordneten Radialvorsprüngen innerhalb eines Steges, weiter bevorzugt innerhalb aller Stege der Lagerbuchse. Der kleinste Abstand kann auch die Dicke des Elastomerelements im direkten Bereich zwischen den jeweiligen Radialvorsprüngen sein. Ein identischer oder einheitlicher kleinster Abstand führt zu einer gleichbleibenden statischen Steifigkeit. Dadurch kann nicht nur in vorteilhafter Weise die Eigenresonanz veränderbar sein, es bleibt zudem die statische Steifigkeit in alle drei Raumrichtungen im Wesentlichen unverändert, was ebenfalls wünschenswert sein kann.

Weiterbildungsgemäß kann die Anordnung zumindest zwei auf einer Seite angeordnete Radialvorsprünge und zumindest einen auf der anderen Seite angeordneten Radialvorsprung umfassen. Denkbar ist also beispielsweise, dass an einer der Seiten zwei Radialvorsprünge und an der gegenüberliegenden anderen Seite ein Radialvorsprung angeordnet ist. Somit ragt ein gegenüberliegender Radialvorsprung in einen von benachbarten Radialvorsprüngen an einer Seite axial begrenzten Elastomerabschnitt ein, wobei sich die axiale Begrenzung auch über den Kopfabschnitt des jeweiligen Radialvorsprungs in Radialrichtung hinaus erstrecken kann. Der gegenüberliegende eine Radialvorsprung kann in Längsrichtung mittig zwischen den beiden benachbarten Radialvorsprüngen einer Seite angeordnet sein. Um nun die Lagerbuchse konstruktiv anzupassen, kann der Längsabstand zwischen benachbarten Radialvorsprüngen verkleinert werden, um eine geringere Elastomermasse zu begrenzen, und vergrößert werden, um einer größere Elastomermasse zu begrenzen. Gleichsam kann auch die Längserstreckung des gegenüberliegenden Radialvorsprungs angepasst werden, was insbesondere zur Erhaltung eines direkten kleinsten einheitlichen Abstandes dient. Dadurch sind unterschiedliche Resonanzfrequenzen erreichbar. Die Radialvorsprünge, die an einer gleichen Seite angeordnet sind, können identisch ausgestaltet sein, zumindest jedoch eine einheitliche Erstreckung in Radialrichtung und/oder Längsrichtung aufweisen.

Gemäß einer Ausgestaltung kann zwischen an einer der Seiten benachbarten Radialvorsprüngen ein Abstand, vorzugsweise ein Kopfabstand, ausgebildet sein. Zusätzlich oder alternativ kann der zumindest eine an der jeweils anderen der Seiten angeordnete Radialvorsprung eine Erstreckungsbreite in Richtung der Zentrallängsachse, vorzugsweise eine Kopfbreite, aufweisen. Der Kopfabstand kann der Abstand zwischen den beiden Radialvorsprüngen im Bereich deren jeweiliger Kopfabschnitte sein. Die Kopfabstände und/oder Kopfbreiten können identisch oder unterschiedliche innerhalb eines Steges oder innerhalb der Lagerbuchse sein.

Entsprechend einer Weiterbildung kann der Längsschnittverlauf einer der Seiten zwischen dort benachbarten Radialvorsprüngen dem Längsschnittverlauf zumindest eines Kopfabschnitts eines Radialvorsprungs entsprechen, der an der jeweils anderen der Seiten angeordnet ist, vorzugsweise mittig bezüglich der benachbarten Radialvorsprünge. Somit sind also beide Seiten in Radialrichtung deckungsgleich ausgebildet. Sie können also gedanklich in einen Formschluss gebracht werden. Die Radialdicke des Elastomerelements kann daher in diesem Bereich gleichmäßig ausgestaltet werden.

Weiterbildungsgemäß weist zumindest einer der Radialvorsprünge längsschnittlich eine Trapezform auf, vorzugsweise die eines gleichschenkligen Trapezes. Es können auch alle Radialvorsprünge eine solche Trapezform aufweisen. Vorzugsweise verjüngt sich der Längsschnitt in Richtung der anderen Seite ausgehend von einem Fußabschnitt hin zu einem Kopfabschnitt. Die Seitenflanken der Radialvorsprünge können mit der Längsachse einen Winkel im Bereich von 45° bis 90° vorzugsweise im Bereich von 60° bis 70°einschließen. Einander zugewandte Seitenflanken von an unterschiedlichen Seiten angeordneten Radialvorsprüngen können parallel verlaufend ausgebildet sein. Die längsschnittliche Form kann jedoch auch rechteckig oder quadratisch sein. Auch hier kann der zumindest eine gegenüberliegende Radialvorsprung im Wesentlichen senkrecht zu der axialen Richtung angeordnet sein. Die freien Ecken jedes Radialvorsprungs können mit abgerundeten oder eckigen Kanten ausgebildet sein.

Denkbar ist gemäß einer weiteren Ausgestaltung, dass die Stege um 45°, 60°, 90°, 120° oder 180° bezüglich der Zentrallängsachse zueinander versetzt angeordnet sind und/oder in Längsrichtung betrachtet, eine gedachte Verlängerung zumindest einer Außenflanke eines Steges durch die Zentrallängsachse verläuft. Die Stege können also in Umfangsrichtung gleichmäßig beabstandet sein, wobei sich zwei Stege diametral bezüglich der Zentrallängsachse gegenüberliegen können. Die Stege können zentrisch auf die Zentrallängsachse zulaufend ausgebildet sein, um bei Radialbelastung kein Drehmoment in den Innenkern einzutragen. Vorzugsweise schneiden beide Außenflanken jedes Steges die Zentrallängsachse. Die Außenflanken bezüglich der Zentrallängsachse diametral gegenüberliegender Stege können in einer gemeinsamen Ebene angeordnet sein. Die Seitenflanken können jedoch auch in den Längsfreiraum einragend ausgebildet sein, beispielsweise mittels einer Einwölbung.

Weiterbildungsgemäß können die an einer der Seiten angeordneten Radialvorsprünge diametral bezüglich der Zentrallängsachse gegenüberliegender Anordnungen gleiche Radialabstände zur Zentrallängsachse aufweisen. Die gegenüberliegenden Radialvorsprünge ragen also gleich weit in Radialrichtung das Elastomer ein. Sie liegen somit auf einem gleichen Durchmesserkreis, dessen Zentrum auf der Zentrallängsachse liegt.

Denkbar ist eine Lagerbuchse, bei der die zumindest eine Anordnung spiegelsymmetrisch zu einer Quermittelebene der Lagerbuchse ausgebildet sein kann. Die zumindest eine Anordnung kann jedoch auch in sich bezüglich einer Querebene spiegelsymmetrisch sein, welche beabstandet zur Quermittelebene der Lagerbuchse verläuft. Erfindungsgemäß sind beide diametral bezüglich der Zentrallängsachse gegenüberliegende Anordnungen spiegelsymmetrisch zu einer Quermittelebene oder zu einer eigenen Querebene ausgebildet.

Vorzugsweise sind alle Anordnungen derart spiegelsymmetrisch ausgebildet.

Erfindungsgemäß ist ein unterschiedliches Ausgestalten der diametral bezüglich der Zentrallängsachse angeordneten Anordnungen. Die Ausgestaltung kann sich auf die Geometrie beziehen. Bei unterschiedlicher Ausgestaltung kann von einer asymmetrischen Lagerbuchse gesprochen werden, da beide Stege bezüglich einer Längsmittelebene unterschiedlich ausgestaltet werden können. Durch eine größtmögliche unterschiedliche Ausgestaltung der beiden diametralen Anordnungen kann eine große Asymmetrie erreicht werden. Dadurch ist eine Lagerbuchse realisierbar, bei welcher keine Resonanzen in der hochfrequenten Kennung ersichtlich sind, wobei der Hochfrequenzbereich insbesondere zwischen 500 Hz und 3000 Hz liegen kann. Für die dynamische Steifigkeit im Bereich bis 3000 Hz hat dies den Effekt, dass sich keine gemeinsame Schwingungsform ausbilden kann und die zur selben Frequenz in Resonanz schwingende Masse möglichst klein ausfällt. Bei nicht beanspruchter identischer Ausgestaltung, insbesondere aller Stege, kann von einer symmetrischen Lagerbuchse gesprochen werden, da beide Stege bezüglich der Längsmittelebene identisch ausgestaltet werden können. Hierbei ist die Lagerbuchse zudem rotationssymmetrisch bezüglich der Zentrallängsachse ausgebildet. Die asymmetrische Lagerbuchse dient insbesondere der Zerstreuung eines Resonanzpeaks über das Frequenzband. Die symmetrische Lagerbuchse ist kostengünstig, da die einzelnen Bauteile nicht zwingend orientiert in ein Vulkanisationswerkzeug eingelegt werden müssen. Auch hier kann eine Charakterisierung der hochfrequenten Kennung erfolgen, jedoch verbleibt in der Kennung ein deutlicher Peak, der je nach Abstand der Geometrien oder Radialvorsprünge in der Frequenzlage anders orientiert werden kann. Die symmetrische Lagerbuchse dient insbesondere der Verschiebung eines Resonanzpeaks in seiner Frequenzlage.

Denkbar ist, dass bei der Lagerbuchse die Kopfbreite eines Radialvorsprungs in dieser Anordnung kleiner sein kann als der Kopfabstand benachbarter Radialvorsprünge an einer Seite in der gleichen Anordnung. Zugleich kann bei der diametral bezüglich der Zentrallängsachse angeordneten Anordnungen die Kopfbreite eines Radialvorsprungs in dieser Anordnung kleiner sein als der Kopfabstand benachbarter Radialvorsprünge an einer Seite in der gleichen Anordnung. Die Kopfbreiten und Kopfabstände sind Distanzen. Die Kopfabstände und/oder Kopfbreiten von an einer Seite angeordneten Radialvorsprüngen diametral bezüglich der Längsachse gegenüberliegender Anordnungen können identisch oder unterschiedlich sein. Der Kopfabstand der einen Anordnung kann kleiner sein kann als eine Kopfbreite der diametralen Anordnung, vorzugsweise weisen die Distanzen gleichmäßige Längenunterschiede auf, bzw. die Distanzen können sich um ein festes Maß oder ein Vielfaches des festen Maßes unterscheiden. Durch ein bei Auslegung der Lagerbuchse gleichmäßiges aufeinander zu oder voneinander weg Schieben der benachbarten Radialvorsprünge in einer Anordnung an einer Seite wird die sich dazwischen befindliche Elastomermasse verändert. Das kann dafür sorgen, dass sich unterschiedliche Resonanzfrequenzen ergeben und das Elastomerlager so bezüglich einer gewünschten Einbausituation ausgelegt werden kann.

Denkbar ist zudem, dass zumindest ein Radialvorsprung einteilig, vorzugsweise monolithisch bzw. stoffeinheitlich, mit dem Innenkern bzw. dem Außenrohr ausgebildet sind. Dadurch ist der Radialvorsprung von dem Innenkern bzw. dem Außenrohr ausgebildet. Eine derartige Ausgestaltung reduziert die Anzahl einzelner Bauteile und die Herstellungskomplexität, da wenige Teile in das Vulkanisationswerkzeug einzulegen sind.

Denkbar ist bei der Lagerbuchse, dass der in Richtung der Zentrallängsachse zu einem Radialvorsprung benachbarte und vorzugsweise bezüglich der Lagerbuchse stirnseitige Abschnitt des Elastomerkörpers eine Längserstreckung aufweisen kann, die höchstens der Längserstreckung des benachbarten Radialvorsprungs entspricht. Somit ist das Elastomerelement stirnseitlich nicht dicker als der dort angeordnete Radialvorsprung. Das kann insbesondere den zumindest einen Radialvorsprung am Innenkern betreffen.

Der zumindest eine Radialvorsprung am Innenkern kann zwischen 10% und 70% des Zwischenbereichs in Radialrichtung überdecken, vorzugsweise 20%. Der zumindest eine Radialvorsprung am Außenrohr kann zwischen 70% und 10% des Zwischenbereichs in Radialrichtung überdecken, vorzugsweise 60%. Der überdeckungsfreie Bereich in Längsrichtung zwischen den Radialvorsprüngen kann zwischen 10% und 30% des Zwischenbereichs in Radialrichtung liegen, vorzugsweise bei 20%. Die Summe aus der Radialerstreckung des zumindest einen Radialvorsprungs am Innenkern, des zumindest einen Radialvorsprungs am Außenrohr und des überdeckungsfreien radialen Bereichs dazwischen kann 100% des Zwischenbereichs in Radialrichtung betragen.

Das Verhältnis einer Kopfbreite zur Längserstreckung des Elastomerelements und/oder des Innenkerns und/oder des Außenrohrs kann im Bereich von 1:8 bis 1:1,25, vorzugsweise im Bereich von 1:5,5 bis 1:2 liegen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Stirnseitenansicht einer erfindungsgemäßen Lagerbuchse nach einer ersten Ausführungsform,
- Fig. 2: eine erste Längsschnittansicht durch die Lagerbuchse nach Fig. 1 entlang der Linie II-II,
- Fig. 3: eine zweite Längsschnittansicht durch die Lagerbuchse nach Fig. 1 entlang der Linie III-III,
- Fig. 4: eine Stirnseitenansicht einer erfindungsgemäßen Lagerbuchse nach einer zweiten Ausführungsform,
- Fig. 5: eine erste Längsschnittansicht durch die Lagerbuchse nach Fig. 4 entlang der Linie V-V, und
- Fig. 6: eine zweite Längsschnittansicht durch die Lagerbuchse nach Fig. 4 entlang der Linie VI-VI.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechende Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

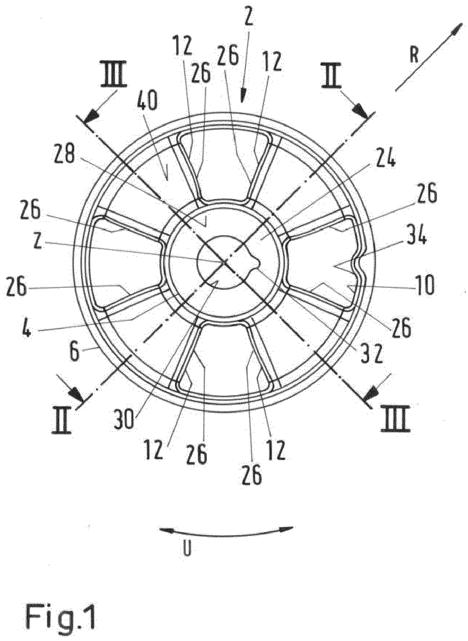

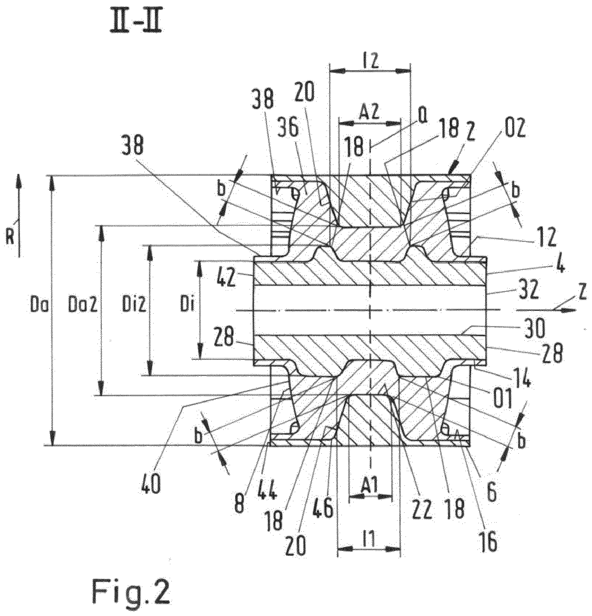

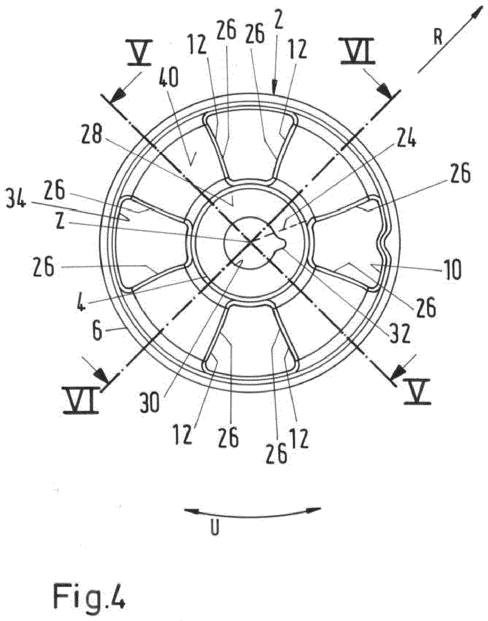

Die Figuren 1 bis 3 zeigen eine erste Ausführungsform der erfindungsgemäßen Lagerbuchse 2 in einer asymmetrischen Ausgestaltung. Abgebildet ist eine Vierstegbuchse, also eine Lagerbuchse 2 mit vier Stegen 12. Die gezeigte Lagerbuchse 2 ist von einer Zentrallängsachse Z und einer Quermittelebene Q durchgriffen und umfasst einen zylinderförmigen und als ungeschlitzte Hülse ausgebildeten Innenkern 4, ein ebenfalls zylinderförmiges und als ungeschlitzte Hülse ausgebildetes Außenrohr 6 und einen Elastomerkörper 8. Der Innenkern 4 ist umfangsseitig in Umfangsrichtung U von dem Außenrohr 6 umgeben, wobei Innenkern 4 und Außenrohr 6 koaxial ausgerichtet sind. Der Innenkern 4 weist entlang der Zentrallängsachse Z einen Durchgriff 30 mit einer Nut 32 zur ausgerichteten Montage auf. Da das Außenrohr 6 in Radialrichtung R beabstandet zum Innenkern 4 angeordnet ist, ist dazwischen ein Zwischenbereich 10 ausgebildet. Im Zwischenbereich 10 ist der Elastomerkörper 8 angeordnet. Wie insbesondere in Fig. 1 und 4 zu sehen, umfasst der Elastomerkörper 8 vier gleichmäßig um die Zentrallängsachse Z verteilte Stege 12. Die Stege sind also um 90° versetzt zueinander angeordnet, so dass sich jeweils zwei Stege 12 diametral bezüglich der Zentrallängsachse Z gegenüberliegen, wie in den Fig. 2 und 3 bzw. 5 und 6 gezeigt. Die Stege 12 sind in Radialrichtung R und in Richtung der Zentrallängsachse Z unterbrechungsfrei ausgebildet, verlaufen jeweils in Radialrichtung R und überspannen den Zwischenbereich 10 in Radialrichtung R komplett. Jeder Steg 12 weist in Umfangsrichtung U zwei Seitenflächen oder Außenflanken 26 auf, wobei eine Verlängerung 24 jeder der Außenflanken 26 durch die Zentrallängsachse Z verläuft. Dadurch weist jeder Steg 12 zumindest im Zwischenbereich 10 einen Kreissektorquerschnitt auf. Zwischen in Umfangsrichtung U benachbarten Stegen 12 ist im Zwischenbereich 10 jeweils ein Längsfreiraum 34 ausgebildet, welcher sich über die gesamte Längserstreckung der benachbarten Stege 12 erstreckt. Jeder Längsfreiraum 34 ist begrenzt radial innenseitig durch den Innenkern 4, radial außenseitig durch das Außenrohr 6 und in Umfangsrichtung U durch die beiden benachbarten Stege 12 beziehungsweise deren Seitenflanken 26. Jeder Längsfreiraum 34 ist frei von separaten Anschlagselementen und ist als durchgehende Ausnehmung ausgebildet, die zu beiden Stirnseiten 28 offen ist.

Wie die Längsschnittansichten in Fig. 2, 3, 5 und 6 zeigen, ist das Elastomerelement 8 an den Innenkern 4 und das Außenrohr 6 anvulkanisiert, so dass sich dort Anbindungsabschnitte ausbilden. Die Längsschnittansichten zeigen zudem, dass das Elastomerelement 8 die gesamte Umfangsseite 14 des Innenkerns 4 und die gesamte Innenseite 16 des Außenrohrs 6 bedeckt, wobei das Elastomerelement 8 in Bereich der Stirnseiten 28 der Lagerbuchse 2 kragenartig dünn ausläuft und dort keine schwingungsbeeinflussende Funktion hat. Jeder Steg 12 umfasst also einen Hauptabschnitt 36 und die dünn auslaufenden Kragenabschnitte 38. Der Hauptabschnitt 36 ist längsschnittlich M-förmig ausgebildet, wobei die beiden Grundstriche der M-Form zwischen Innenkern 4 und Außenrohr 6 verlaufen und außenseitig eine Stirnseite 40 aufweisen. Die Stirnseiten 40 verlaufen bezüglich der Zentrallängsachse Z längsschnittlich verkippt, so dass sich der Hauptabschnitt 36 in Richtung Außenrohr 6 längsschnittlich verjüngt bzw. in Richtung Innenkern 4 längsschnittlich verbreitert.

Der Innenkern 4 weist einen zylindrischen Grundkörper 42 mit der Umfangsseite 14 auf. Gegenüber dem Grundkörper 42 als Basisbereich springen zwei Radialvorsprünge 18 vor, welche in den Elastomerkörper 18 radial einragen und als Innenvorsprünge bezeichenbar sind. Das Außenrohr 6 weist ebenfalls einen zylindrischen Grundkörper 44 mit der Innenseite 16 auf. Gegenüber dem Grundkörper 44 als Basisbereich springt ein Radialvorsprung 20 vor, welcher in den Elastomerkörper 18 radial einragt und als Außenvorsprung bezeichnet werden kann. Die Radialvorsprünge 18, 20 sind stoffeinheitlich mit dem Innenkern 4 bzw. dem Außenrohr 6 ausgebildet und in Längsrichtung abwechselnd am Innenkern 4 und am Außenrohr 6 angeordnet. Sie sind in Längsrichtung versetzt zueinander an jeweils gegenüberliegenden Seiten 14, 16 angeordnet. Die Radialvorsprünge 18, 20 eines Steges 12 bilden eine Anordnung von Radialvorsprüngen. Die Radialvorsprünge 18, 20 weisen längsschnittlich die Form eines gleichschenkligen Trapezes auf, wobei sich die Form ausgehend von der jeweiligen Seite 14, 16 in das Elastomerelement 8 längsschnittlich verjüngt. Die freien Ecken jedes Radialvorsprungs 18, 20 sind mit abgerundeten Kanten ausgebildet.

Die Seitenflanken der Radialvorsprünge 18, 20 verlaufen gegenüber der Zentrallängsachse Z verkippt und schließen mit ihr einen Winkel von etwa 67° ein. Die beiden Radialvorsprünge 18 oder Innenvorsprünge ragen um etwa 20 % der Radialerstreckung des Zwischenbereichs in das Elastomerelement 8 ein. Der Radialvorsprung 20 oder Außenvorsprung ragt um etwa 60 % der Radialerstreckung des Zwischenbereichs in das Elastomerelement 8 ein. Somit ergibt sich in Radialrichtung R ein überdeckungsfreier Bereich, in welchem sich die an den gegenüberliegenden Seiten 14, 16 angeordneten Radialvorsprünge 18, 20 nicht überdecken. Der überdeckungsfreie Bereich beträgt hier 20% der Radialerstreckung des Zwischenbereichs. Jeder Radialvorsprung 18, 20 weist zwischen seinen Kanten einen Kopfabschnitt 22 und anderenends einen Fußabschnitt 46 auf, über welchen er angebunden ist.

Der kleinste Abstand zwischen an jeweils gegenüberliegenden Seiten 14, 16 angeordneten Radialvorsprüngen 18, 20 kann zwischen deren Kanten der jeweiligen Kopfabschnitte 22 angetragen werden. Dieser kleinste Abstand b ist für alle derart benachbarten Radialvorsprünge 18, 20 innerhalb einer Lagerbuchse 20 identisch, um eine gleichmäßige statische Steifigkeit in alle drei Raumrichtungen zu gewährleisten. Die beiden Radialvorsprünge 18 oder Innenvorsprünge begrenzen in Längsrichtung zwischen sich einen Elastomerabschnitt, in welchen der gegenüberliegende Radialvorsprung 20 einragt. Der Radialvorsprung 20 ist mittig zu den beiden Radialvorsprüngen 18 angeordnet.

Erkennbar ist zudem, dass der Längsschnittverlauf der Innenseite 16 zwischen den dort benachbarten Radialvorsprüngen 18 dem Längsschnittverlauf des Kopfabschnitts 22 des gegenüberliegenden Radialvorsprungs 20 entspricht. Somit sind also beide Seiten in Radialrichtung deckungsgleich ausgebildet. Sie können daher gedanklich in einen Formschluss gebracht werden und auch die einander zugewandten Seitenflanken der Radialvorsprünge 18 können dann deckungsgleich auf die beiden Seitenflanken des Radialvorsprungs 20 projiziert werden. Die Radialdicke des Elastomerelements 8 ist daher in diesem Bereich gleichmäßig ausgestaltet.

Jede Lagerbuchse 2 ist spiegelsymmetrisch bezüglich der Quermittelebene Q ausgebildet, wobei dies lediglich optional ist.

Die bisherige Figurenbeschreibung kann für alle Figuren 1 bis 6 gelten. Nachfolgend soll nun auf die Einzelheiten der beiden Ausführungsformen eingegangen werden.

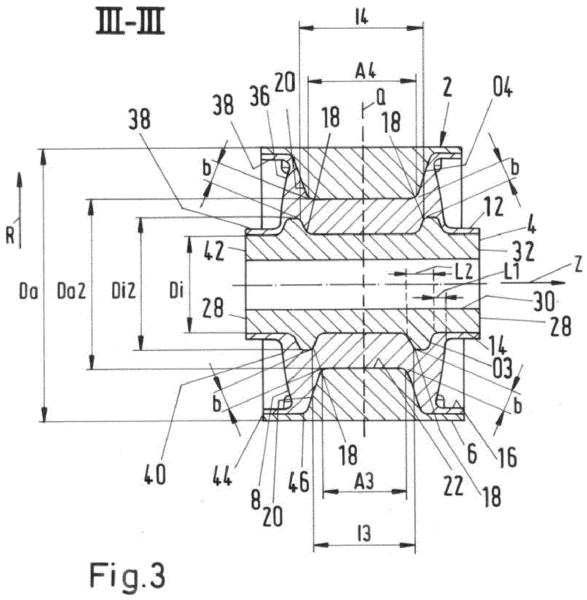

Eine Zusammenschau der Figuren 2 und 3 verdeutlicht, dass die Lagerbuchse 2 der ersten Ausführungsform vier Anordnungen O1, O2, O3, O4 von Radialvorsprüngen 18, 20 aufweist, und zwar in jedem Steg 12 eine separate Anordnung O1, O2, O3, O4. Jede Anordnung O1, O2, O3, O4 umfasst jeweils in einem Steg 12 die radial innenseitig des Zwischenbereichs 10 angeordneten Radialvorsprünge 18 und den radial außenseitig des Zwischenbereichs 10 angeordneten Radialvorsprung 20. Jeder Radialvorsprung 18, 20 weist einen Kopfabschnitt 22 mit einer Kopfbreite A1, A2, A3, A4 auf. Die Kopfbreiten der Radialvorsprünge 18 in einer Anordnung O1, O2, O3, O4 sind identisch. Zwischen Kopfabschnitten 22 benachbarter Radialvorsprünge 18 ist ein Kopfabstand I1, I2, I3, I4 vorhanden, also der direkte Abstand in Längsrichtung zwischen den beiden Kopfabschnitten 22.

Erkennbar ist, dass der Grundkörper 42 der Innenhülse 4 einen über die gesamte Längserstreckung einheitlichen Außendurchmesser Di aufweist. Die an der Innenhülse 4 angeordneten Radialvorsprünge 18 aller vier Anordnungen O1, O2, O3, O4 weisen einheitliche Radialerstreckungen und gleiche Radialabstände zur Zentrallängsachse Z auf, so dass alle Kopfabschnitte 22 der Radialvorsprünge 18 auf einem gleichen Durchmesserkreis Di2 liegen, dessen Zentrum auf der Zentrallängsachse Z liegt. Die Radialvorsprünge 18 ragen also gleich weit in das Elastomerelement 8 ein. Zu erkennen ist zudem, dass der Grundkörper 44 des Außenrohrs 6 einen über die gesamte Längserstreckung einheitlichen Außendurchmesser Da aufweist. Die an dem Außenrohr 6 angeordneten Radialvorsprünge 20 aller vier Anordnungen O1, O2, O3, O4 weisen einheitliche Radialerstreckungen und gleiche Radialabstände zur Zentrallängsachse Z auf, so dass alle Kopfabschnitte 22 der Radialvorsprünge 20 auf einem gleichen Durchmesserkreis Da2 liegen, dessen Zentrum auf der Zentrallängsachse Z liegt.

Die Anordnungen O1, O2, O3, O4 unterscheiden sich insbesondere durch die unterschiedlichen Kopfabstände I1, I2, I3, I4 und die daran angepassten Kopfbreiten A1, A2, A3, A4 der entsprechenden Radialvorsprünge 20. Auch dadurch ist eine asymmetrische Lagerbuchse 2 verwirklicht. Die Lagerbuchse 2 ist also spiegelasymmetrisch zur Zentrallängsachse Z ausgebildet.

Die Kopfbreite A1 des Radialvorsprungs 20 der ersten Anordnung O1 ist um eine definierte Länge kleiner als der Kopfabstand I1 zwischen den Radialvorsprüngen 18 der ersten Anordnung O1. Der Kopfabstand I1 der ersten Anordnung O1 ist um diese definierte Länge kleiner als die Kopfbreite A2 des Radialvorsprungs 20 der zweiten Anordnung O2. Die Kopfbreite A2 des Radialvorsprungs 20 der zweiten Anordnung O2 ist um diese definierte Länge kleiner als der Kopfabstand I2 zwischen den Radialvorsprüngen 18 der zweiten Anordnung O2. Der Kopfabstand I2 der zweiten Anordnung O2 ist um diese definierte Länge kleiner als die Kopfbreite A3 des Radialvorsprungs 20 der dritten Anordnung O3. Die Kopfbreite A3 des Radialvorsprungs 20 der dritten Anordnung O3 ist um diese definierte Länge kleiner als der Kopfabstand I3 zwischen den Radialvorsprüngen 18 der dritten Anordnung O3. Der Kopfabstand I3 der dritten Anordnung O3 ist um diese definierte Länge kleiner als die Kopfbreite A4 des Radialvorsprungs 20 der vierten Anordnung O4. Die Kopfbreite A4 des Radialvorsprungs 20 der vierten Anordnung O4 ist um diese definierte Länge kleiner als der Kopfabstand I4 zwischen den Radialvorsprüngen 18 der vierten Anordnung O4. Die definierte Länge ist also ein festes Maß, so dass sich gleichmäßige Längenunterschiede ergeben. Die Längen unterscheiden sich in diesem Fall um das feste Maß oder ein Vielfaches des festen Maßes.

Abgebildet ist hier zwar, dass die erste Anordnung O1 und die zweite Anordnung O2 diametral zueinander angeordnet sind und, dass die dritte Anordnung O3 und die vierte Anordnung O4 diametral zueinander angeordnet sind, jedoch können auch die erste und vierte Anordnung O1, O4, sowie die zweite und dritte Anordnung O2, O3 diametral zueinander angeordnet sein.

Insbesondere die Anordnungen O3 und O4 zeigen, dass der in Richtung der Zentrallängsachse Z zu einem Radialvorsprung 18 benachbarte und bezüglich der Lagerbuchse 2 stirnseitige Abschnitt des Elastomerkörpers 8 eine Längserstreckung L1 aufweist, die höchstens der Längserstreckung L2 des benachbarten Radialvorsprungs 18 entspricht, wobei L2 als die Fußbreite des Radialvorsprungs 18 angetragen, jedoch darauf nicht beschränkt ist. Dadurch kann verhindert werden, dass die Elastomerdicke außenseitig der Radialvorsprünge 18 zu groß wird. Bei Richtung Quermittelebene Q verstellten oder aufeinander zu angeordneten Radialvorsprüngen 18 an einer Seite kann die außenseitige Elastomerdicke und/oder die radiale Elastomerdicke zu groß werden, um eine geeignete Einstellung der dynamischen Steifigkeit zu ermöglichen. Um nun zu verhindert, dass die axiale außenseitige und/oder radiale Elastomerdicke zu groß wird, kann zumindest ein Radialvorsprung 18 eine Längserstreckung L2 aufweisen, die derart bemessen ist, dass der Radialvorsprung 18 den Anbindungsbereich des Elastomerelements 8 an der bezüglich des Zwischenbereichs 10 gegenüberliegenden Seite zumindest abschnittsweise in Radialrichtung überdeckt. Der Radialvorsprung 18 ist somit in Radialrichtung R deckungsgleich mit dem radial gegenüberliegenden Anbindungsbereich des Elastomerelements 8 am Außenrohr 6, insbesondere mit dem Hauptabschnitt 36. Vorzugsweise steht der Anbindungsbereich des Elastomerkörpers 8, vorzugsweise der Anbindungsbereich des Hauptabschnitts 36, am Außenrohr 6 in Längsrichtung nicht über einen entsprechenden Radialvorsprung 18 hinaus. Eine derartige Längserstreckung L2 von langen Radialvorsprüngen 18 ist in der ersten Anordnung O1 gezeigt.

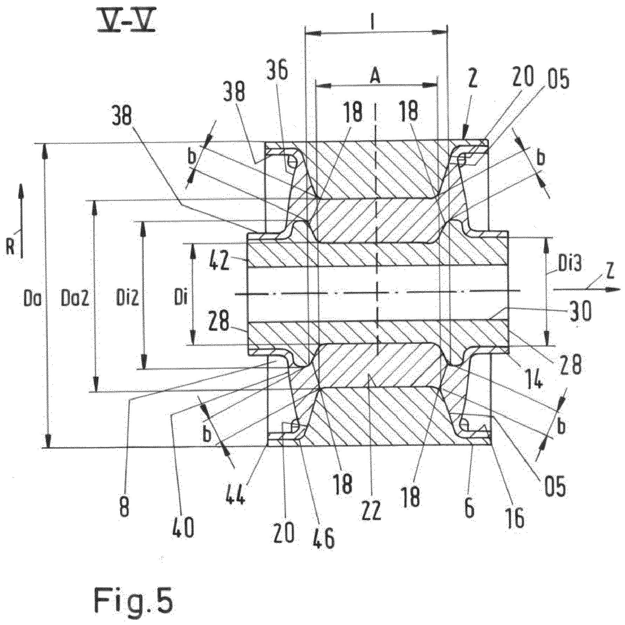

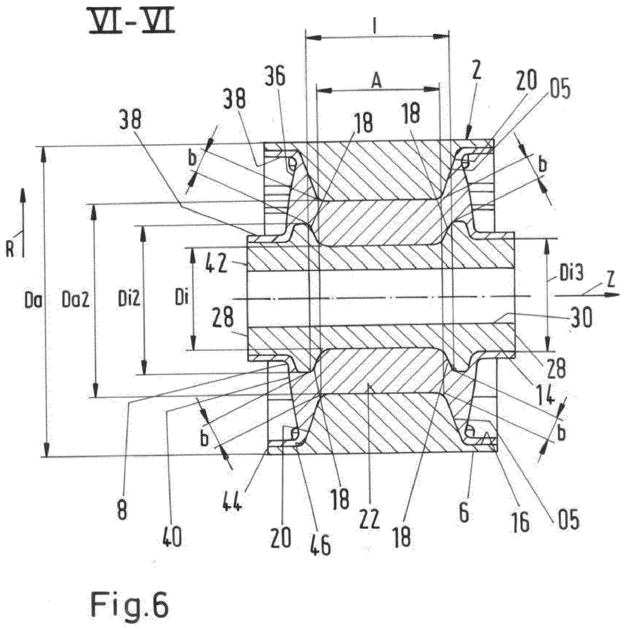

Im Nachfolgenden soll lediglich auf die wesentlichen Unterschiede zur Lagerbuchse 2 gemäß den Figuren 1 bis 3 eingegangen werden. Die Figuren 4 bis 6 zeigen eine zweite Ausführungsform der erfindungsgemäßen Lagerbuchse in einer symmetrischen Ausgestaltung, wobei hier lediglich eine einzige Anordnung O5 realisiert ist, die in jedem der vier Stege 12 ausgebildet ist. Die Lagerbuchse 2 ist somit nicht nur spiegelsymmetrisch zur Quermittelebene Q, sondern auch rotationssymmetrisch zur Zentrallängsachse Z abgebildet. Daher zeigen die Figuren 5 und 6 identisches. Die Radialvorsprünge 20 weisen eine einheitliche Kopfbreite A auf und zwischen benachbarten Radialvorsprüngen 18 an einer Seite ist ein einheitlicher Kopfabstand I angetragen.

Erkennbar ist, dass der Grundkörper 42 der Innenhülse 4 einen über die Längserstreckung seines Zentralbereichs als Basisbereich einheitlichen Außendurchmesser Di aufweist. Stirnseitig weist der Grundkörper 42 an seinen beiden Enden einen gegenüber dem Außendurchmesser Di vergrößerten Außendurchmesser Di3 auf.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Lagerbuchse
- 4: Innenkern
- 6: Außenrohr
- 8: Elastomerkörper
- 10: Zwischenbereich
- 12: Steg
- 14: Umfangsseite
- 16: Innenseite
- 18: Radialvorsprung
- 20: Radialvorsprung
- 22: Kopfabschnitt
- 24: Verlängerung
- 26: Außenflanke
- 28: Stirnseite
- 30: Durchgriff
- 32: Nut
- 34: Längsfreiraum
- 36: Hauptabschnitt
- 38: Kragenabschnitt
- 40: Stirnseite
- 42: Grundkörper
- 44: Grundkörper
- 46: Fußabschnitt
- A, A1, A2, A3, A4: Kopfbreite
- b: Abstand
- Da: Außendurchmesser
- Da2: Durchmesserkreis
- Di: Außendurchmesser
- Di2: Durchmesserkreis
- Di3: Außendurchmesser
- I, I1, I2, I3, I4: Kopfabstand
- L1: Längserstreckung
- L2: Längserstreckung
- O1, O2, O3, O4, O5: Anordnung
- Q: Quermittelebene

## Patentansprüche

1. Lagerbuchse (2), durch welche eine Zentrallängsachse (Z) ragt, umfassend einen Innenkern (4), der der sich entlang der Zentrallängsachse (Z) erstreckt, ein Außenrohr (6), welches umfangsseitig zu dem Innenkern (4) angeordnet ist, so dass sich ein Zwischenbereich (10) ausbildet, zumindest einen Elastomerkörper (8), welcher zwischen dem Innenkern (4) und dem Außenrohr (6) im Zwischenbereich (10) angeordnet ist, wobei der Elastomerkörper (8) in Radialrichtung (R) bezüglich der Zentrallängsachse (Z) verlaufende Stege (12) aufweist, die den Zwischenbereich (10) überspannen, wobei zumindest einem der Stege (12) eine Anordnung (O1, O2, O3, O4, O5) von Radialvorsprüngen (18, 20) zugeordnet ist, welche an der Umfangsseite (14) des Innenkerns (4) und an der Innenseite (16) des Außenrohrs (6) angeordnet ist, wobei die Radialvorsprünge (18, 20) von der jeweiligen Seite (14, 16) in Radialrichtung (R) in den Elastomerkörper (8) einragen, wobei beide diametral bezüglich der Zentrallängsachse (Z) gegenüberliegende Anordnungen (O1, O2, O3, O4, O5) spiegelsymmetrisch zu einer Quermittelebene (Q) oder zu einer eigenen Querebene ausgebildet sind, **dadurch gekennzeichnet, dass** die diametral bezüglich der Zentrallängsachse (Z) angeordneten Anordnungen (O1, O2, O3, O4, O5) unterschiedlich ausgestaltet sind.

2. Lagerbuchse (2) nach Anspruch 1, **dadurch gekennzeichnet, dass** benachbarte Radialvorsprünge (18, 20) in Richtung der Zentrallängsachse (Z) versetzt zueinander an jeweils gegenüberliegenden Seiten (14, 16) angeordnet sind, wobei die Lagerbuchse (2) vorzugsweise zumindest einen am Innenkern (4) angeordneten Innenvorsprung und zumindest einen am Außenrohr (6) angeordneten Außenvorsprung umfasst.

3. Lagerbuchse (2) nach einem der vorangehenden Ansprüche, **dadurch gekennzeichnet, dass** sich die an jeweils gegenüberliegenden Seiten (14, 16) angeordneten Radialvorsprünge (18, 20) in Radialrichtung (R) nicht überdecken.

4. Lagerbuchse (2) nach einem der vorangehenden Ansprüche, **dadurch gekennzeichnet, dass** zwischen an jeweils gegenüberliegenden Seiten (14, 16) angeordneten Radialvorsprüngen (18, 20) ein direkter kleinster Abstand (b) vorhanden ist.

5. Lagerbuchse (2) nach einem der vorangehenden Ansprüche, **dadurch gekennzeichnet, dass** die Anordnung (O1, O2, O3, O4, O5) zumindest zwei auf einer Seite (14, 16) angeordnete Radialvorsprünge (18, 20) und zumindest einen auf der anderen Seite (14, 16) angeordneten Radialvorsprung (18, 20) umfasst.

6. Lagerbuchse (2) nach einem der vorangehenden Ansprüche, **dadurch gekennzeichnet, dass** zwischen an einer der Seiten (14) benachbarten Radialvorsprüngen (18) ein Abstand, vorzugsweise ein Kopfabstand (I, I1, I2, I3, I4), ausgebildet ist, und/oder der zumindest eine an der jeweils anderen der Seiten (16) angeordnete Radialvorsprung (20) eine Erstreckungsbreite in Richtung der Zentrallängsachse (Z), vorzugsweise eine Kopfbreite (A, A1, A2, A3, A4), aufweist.

7. Lagerbuchse (2) nach einem der vorangehenden Ansprüche, **dadurch gekennzeichnet, dass** der Längsschnittverlauf einer der Seiten (14) zwischen dort benachbarten Radialvorsprüngen (18) dem Längsschnittverlauf zumindest eines Kopfabschnitts (22) eines Radialvorsprungs (20) entspricht, der an der jeweils anderen der Seiten (16) angeordnet ist, vorzugsweise mittig bezüglich der benachbarten Radialvorsprünge (18).

8. Lagerbuchse (2) nach einem der vorangehenden Ansprüche, **dadurch gekennzeichnet, dass** zumindest einer der Radialvorsprünge (18, 20) längsschnittlich eine Trapezform aufweist, vorzugsweise die eines gleichschenkligen Trapezes.

9. Lagerbuchse (2) nach einem der vorangehenden Ansprüche, **dadurch gekennzeichnet, dass** die Stege (12) um 45°, 60°, 90°, 120° oder 180° bezüglich der Zentrallängsachse (Z) zueinander versetzt angeordnet sind und/oder in Längsrichtung betrachtet, eine gedachte Verlängerung (24) zumindest einer Außenflanke (26) eines Steges (12) durch die Zentrallängsachse (Z) verläuft.

10. Lagerbuchse (2) nach einem der vorangehenden Ansprüche, **dadurch gekennzeichnet, dass** die an einer der Seiten (14, 16) angeordneten Radialvorsprünge (18, 20) diametral bezüglich der Zentrallängsachse (Z) gegenüberliegender Anordnungen (O1, O2, O3, O4, O5) gleiche Radialabstände zur Zentrallängsachse (Z) aufweisen.

## Claims

1. Bushing (2) through which a central longitudinal axis (Z) extends, comprising an inner core (4) which extends along the central longitudinal axis (Z), an outer tube (6), which is arranged circumferentially relative to the inner core (4) so as to form an intermediate region (10), at least one elastomeric body (8) which is arranged between the inner core (4) and the outer tube (6) in the intermediate region (10), wherein the elastomeric body (8) has webs (12) extending in the radial direction (R) relative to the central longitudinal axis (Z), which span the intermediate region (10), wherein at least one of the webs (12) is associated with an arrangement (O1, O2, O3, O4, O5) of radial projections (18, 20), which is arranged on the circumferential side (14) of the inner core (4) and on the inner side (16) of the outer tube (6), wherein the radial projections (18, 20) from the respective side (14, 16) project into the elastomeric body (8) in the radial direction (R), wherein both arrangements (O1, O2, O3, O4, O5) are mirror-symmetrical with respect to a transverse central plane (Q) or to a separate transverse plane, **characterised in that** the arrangements (O1, O2, O3, O4, O5) arranged diametrically opposite one another with respect to the central longitudinal axis (Z) are of different designs.

2. Bushing (2) according to claim 1, **characterised in that** adjacent radial projections (18, 20) are arranged offset from one another in the direction of the central longitudinal axis (Z) on respective opposite sides (14, 16), wherein the bushing (2) preferably comprises at least one inner projection arranged on the inner core (4) and at least one outer projection arranged on the outer tube (6).

3. Bushing (2) according to one of the preceding claims, **characterised in that** the radial projections (18, 20) arranged on respective opposite sides (14, 16) do not overlap in the radial direction (R).

4. Bushing (2) according to one of the preceding claims, **characterised in that** there is a direct minimum distance (b) between radial projections (18, 20) arranged on respective opposite sides (14, 16).

5. Bushing (2) according to one of the preceding claims, **characterised in that** the arrangement (O1, O2, O3, O4, O5) comprises at least two radial projections (18, 20) arranged on one side (14, 16) and at least one radial projection (18, 20) arranged on the other side (14, 16).

6. Bushing (2) according to one of the preceding claims, **characterised in that** a distance, preferably a head distance (I, 11, 12, 13, 14), is formed between radial projections (18) adjacent on one of the sides (14), and/or the at least one radial projection (20) arranged on the respective other of the sides (16) has an extension width in the direction of the central longitudinal axis (Z), preferably a head width (A, A1, A2, A3, A4).

7. Bushing (2) according to one of the preceding claims, **characterised in that** the longitudinal section of one of the sides (14) between adjacent radial projections (18) there corresponds to the longitudinal section of at least one head section (22) of a radial projection (20) arranged on the respective other side (16), preferably centrally with respect to the adjacent radial projections (18).

8. Bushing (2) according to one of the preceding claims, **characterised in that** at least one of the radial projections (18, 20) has a trapezoidal cross-section, preferably that of an isosceles trapezium.

9. Bushing (2) according to one of the preceding claims, **characterised in that** the webs (12) are offset by 45°, 60°, 90°, 120° or 180° relative to the central longitudinal axis (Z) and/or, viewed in the longitudinal direction, an imaginary extension (24) of at least one outer flank (26) of a web (12) passes through the central longitudinal axis (Z).

10. Bushing (2) according to one of the preceding claims, **characterised in that** the radial projections (18, 20) arranged on one of the sides (14, 16) have equal radial distances from the central longitudinal axis (Z) in respect of diametrically opposed arrangements (O1, O2, O3, O4, O5).

## Revendications

1. Coussinet de palier (2) traversé par un axe longitudinal central (Z), comprenant un noyau intérieur (4) s'étendant le long de l'axe longitudinal central (Z), un tube extérieur (6), qui est disposé sur le pourtour du noyau intérieur (4) de manière à former une zone intermédiaire (10), au moins un corps en élastomère (8) qui est disposé entre le noyau intérieur (4) et le tube extérieur (6) dans la zone intermédiaire (10), le corps en élastomère (8) présentant des nervures (12) s'étendant dans la direction radiale (R) par rapport à l'axe longitudinal central (Z), qui enjambent la zone intermédiaire (10), où au moins l'une des nervures (12) est associée à un agencement (O1, O2, O3, O4, O5) de saillies radiales (18, 20), lequel agencement est disposé sur le côté périphérique (14) du noyau intérieur (4) et sur le côté intérieur (16) du tube extérieur (6), les saillies radiales (18, 20) s'enfonçant depuis le côté respectif (14, 16) pénètrent dans le corps en élastomère (8) dans la direction radiale (R), les deux agencements (O1, O2, O3, O4, O5), diamétralement opposés par rapport à l'axe longitudinal central, sont symétriques par rapport à un plan médian transversal (Q) ou à un plan transversal propre, **caractérisé en ce que** les agencements (O1, O2, O3, O4, O5) disposés de manière diamétralement opposés par rapport à l'axe longitudinal central (Z) sont conçus différemment.

2. Coussinet de palier (2) selon la revendication 1, **caractérisé en ce que** des saillies radiales adjacentes (18, 20) sont décalées les unes par rapport aux autres dans la direction de l'axe longitudinal central (Z) sur des côtés respectivement opposés (14, 16), le coussinet de palier (2) comprenant de préférence au moins une saillie intérieure disposée sur le noyau intérieur (4) et au moins une saillie extérieure disposée sur le tube extérieur (6).

3. Coussinet de palier (2) selon l'une des revendications précédentes, **caractérisé en ce que** les saillies radiales (18, 20) disposées sur des côtés opposés (14, 16) ne se recouvrent pas dans la direction radiale (R).

4. Coussinet de palier (2) selon l'une des revendications précédentes, **caractérisé en ce qu'**il existe une distance minimale directe (b) entre les saillies radiales (18, 20) disposées sur des côtés opposés respectifs (14, 16).

5. Coussinet de palier (2) selon l'une des revendications précédentes, **caractérisé en ce que** l'agencement (O1, O2, O3, O4, O5) comprend au moins deux saillies radiales (18, 20) disposées sur un côté (14, 16) et au moins une saillie radiale (18, 20) disposée sur l'autre côté (14, 16).

6. Coussinet de palier (2) selon l'une des revendications précédentes, **caractérisé en ce qu'**une distance, de préférence une distance entre les têtes (I, 11, 12, 13, 14), est formé entre des saillies radiales adjacentes (18) sur l'un des côtés (14), et/ou que la au moins une saillie radiale (20) disposée sur l'autre des côtés (16) présente une largeur d'extension dans la direction de l'axe longitudinal central (Z), de préférence une largeur de tête (A, A1, A2, A3, A4).

7. Coussinet de palier (2) selon l'une des revendications précédentes, **caractérisé en ce que** le tracé de la section longitudinale de l'un des côtés (14) entre des saillies radiales (18) qui y sont adjacentes correspond au tracé en coupe longitudinale d'au moins une partie de tête (22) d'une saillie radiale (20) qui est disposée sur l'autre des côtés (16), de préférence au centre par rapport aux saillies radiales (18) adjacentes.

8. Coussinet de palier (2) selon l'une des revendications précédentes, **caractérisé en ce qu'**au moins l'une des saillies radiales (18, 20) présente, en coupe longitudinale, une forme trapézoïdale, de préférence celle d'un trapèze isocèle.

9. Coussinet de palier (2) selon l'une des revendications précédentes, **caractérisé en ce que** les nervures (12) sont décalées de 45°, 60°, 90°, 120° ou 180° par rapport à l'axe longitudinal central (Z) et/ou, vue dans le sens longitudinal, un prolongement imaginaire (24) d'au moins un flanc extérieur (26) d'une nervure (12) passe par l'axe longitudinal central (Z).

10. Coussinet de palier (2) selon l'une des revendications précédentes, **caractérisé en ce que** les saillies radiales (18, 20) disposées sur l'un des côtés (14, 16) présentent, par rapport à l'axe longitudinal central (Z), des distances radiales égales par rapport à l'axe longitudinal central (Z) pour des agencements (O1, O2, O3, O4, O5).
